(19) **Europäisches Patentamt**

**European Patent Office**

**Office européen des brevets**

(11) **EP 0 671 042 B1**

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(51) Int Cl.6: **G08G 1/04**, G06T 7/20

(21) Anmeldenummer: **93924505.6**

(86) Internationale Anmeldenummer:
**PCT/DE93/01067**

(22) Anmeldetag: **09.11.1993**

(87) Internationale Veröffentlichungsnummer:
**WO 94/12961 (09.06.1994 Gazette 1994/13)**

(54) **VERFAHREN ZUR DETEKTION BEWEGTER OBJEKTE**

METHOD OF DETECTING MOVING OBJECTS

PROCEDE PERMETTANT DE DETECTER DES OBJETS EN MOUVEMENT

(84) Benannte Vertragsstaaten:
**AT DE FR GB NL**

(30) Priorität: **30.11.1992 DE 4240186**

(43) Veröffentlichungstag der Anmeldung:
**13.09.1995 Patentblatt 1995/37**

(73) Patentinhaber: **SIEMENS AKTIENGESELLSCHAFT**
**80333 München (DE)**

(72) Erfinder: **DIETL, Thomas**
**D-94405 Landau (DE)**

(56) Entgegenhaltungen:
**EP-A- 0 385 384**        **WO-A-91/12584**

**Beschreibung**

Bei der videobasierten Verkehrsüberwachung wird versucht, in einer digitalisierten Eingangsbildfolge Bewegtobjekte (Fahrzeuge) zu erkennen und zeitlich zu verfolgen (Feiten, et. al., 1991). Dazu werden bei einer festen Kameraposition Algorithmen verwendet, um ein Hintergrundbild zu erzeugen, und durch Differenzbildung des aktuellen Eingangsbildes mit dem Hintergrundbild und anschließender Schwellwertbildung bewegte Bildbereiche zu finden. Die gefundenen Bildbereiche werden in nachfolgenden Verarbeitungsschritten segmentiert (Karmann, v.Brandt, 1990), und in der zeitlichen Abfolge der Bilder verfolgt. Das Verhalten dieser Algorithmen wird durch Parameter bestimmt, für die geeignete Werte zu finden sind.

Für die Parameter wurden bisher Werte verwendet, die sich aus Erfahrungswerten heraus als günstig erwiesen haben. Bei wechselnden Verkehrs- und Witterungsbedingungen sind aber speziell auf die jeweilige Situation angepaßte Werte nötig, um bestmögliche Resultate zu erzielen.

Der vorliegenden Patentanmeldung liegt daher die Aufgabe zugrunde, ein Verfahren zur Detektion bewegter Objekte anzugeben, bei dem die Werte der verwendeten Parameter durch geeignete Regelungen, die auf den Ergebnissen höherer Verarbeitungsebenen basieren, so zu adaptieren, daß die Verarbeitungsschritte auf darunter liegenden Verarbeitungsebenen optimale Resultate liefern. Die Lösung dieser Aufgabe wird erfindungsgemäß durch ein Verfahren zur Detektion bewegter Objekte in einer zeitlichen Folge digitaler Bilder mit Merkmalen nach Anspruch 1 ermöglicht.

Bei dem Verfahren nach Anspruch 1 wird eine zeitliche Folge von Hintergrundbildern und eine zeitliche Folge von binären Objektmasken gemäß den in Anspruch 1 aufgeführten Beziehungen ermittelt, wobei ein Filterkoeffizient in Abhängigkeit von einem Schwellwert gewählt wird. Diese Wahl des Filterkoeffizienten bei der Berechnung der Hintergrundbildfolge trägt dem Erfordernis Rechnung, daß dieser Filterkoeffizient, welcher die Adaption der Hintergrundbildfolge in bewegten Bildbereichen steuert, einerseits so klein wie möglich sein soll, andererseits jedoch groß genug, um auch langsam bewegliche Objekte korrekt detektieren zu können.

Bei einem bevorzugten Ausführungsbeispiel des erfindungsgemäßen Verfahrens wird ein weiterer Filterkoeffizient in Abhängigkeit von dem Schwellwert so gewählt daß höhere Werte des Schwellwertes zu niedrigen Raten bei der Adaption des Hintergrundbildes führen (Anspruch 2).

Bei einer weiteren vorteilhaften Variante des erfindungsgemäßen Verfahrens wird aus den Segmenten der binären Objektmasken eine Bewegtobjektdichte ermittelt und die Werte der Filterkoeffizienten werden in Abhängigkeit von dieser Bewegtobjektdichte so gewählt, daß hohen Werten der Bewegtobjektdichte niedrige Werte der Filterkoeffizienten entsprechen.

Bei einer weiteren bevorzugten Ausführungsform des erfindungsgemäßen Verfahrens wird das momentane Hintergrundbild gespeichert, wenn während eines längeren Zeitraums keine bewegten Objekte detektiert wurden, und dieses gespeicherte Hintergrundbild wird so lange als momentanes Hintergrundbild verwendet, wie die Bewegtobjektdichte einen vorgegebenen Wert übersteigt.

Bei einer weiteren bevorzugten Ausführungsform des erfindungsgemäßen Verfahrens werden die Segmente der binären Objektmasken in brauchbare Segmente bzw. nicht brauchbare Segmente klassifiziert und der Schwellwert wird geregelt, indem

- ein Maluszähler mit vorgegebenem Anfangswert erhöht wird, wenn das Verhältnis von brauchbaren zu nicht brauchbaren Segmenten sehr klein wird, es sei denn, es werden überhaupt keine brauchbaren Segmente erkannt,

- dieser Maluszähler erniedrigt wird, wenn wenige Segmente gefunden werden, und

- der Wert des Maluszählers nach einem längeren Zeitraum durch einen Fünfpunktregler in eine Änderung des Schwellwerts übersetzt wird.

Im folgenden wird die Erfindung anhand bevorzugter Ausführungsbeispiele näher beschrieben.

Bei dem erfindungsgemäßen Verfahren zur Detektion bewegter Objekte wird aus eine zeitlichen Folgen I(k) digitaler Bilder eine zeitliche Folge B(k) von Hintergrundbildern und eine zeitliche Folge M(k) von binären Objektmasken gemäß den Beziehungen

$$(1) \qquad B(k+1)=B(k)+(a1*(1-M(k))+a2*M(k))*(I(k)-B(k))$$

$$(2) \qquad |B(k,p)-I(k,p)| > thr \rightarrow M(k,p)=1$$

$$(3) \qquad |B(k,p)-I(k,p)| <= thr \rightarrow M(k,p)=0$$

ermittelt, wobei k einen zeitlichen Index, p einen Bildpunkt, thr einen Schwellwert sowie a1 und a2 Filterkoeffizienten bezeichnen. Der Koeffizient a2, der die Adaption des Hintergrundbildes in den bewegten Bildbereichen steuert, soll einerseits so klein wie möglich sein, andererseits jedoch groß genug, um langsam bewegliche Objekt, wie z. B. ein- oder ausparkende Fahrzeuge korrekt detektieren zu können. Der Filterkoeffizient a1 muß bei höheren Werten des Schwellwerts thr niedrige Werte annehmen. Um dies zu Erreichen, wird der Filterkoeffizient a2 in Abhängigkeit von dem Schwellwert thr gemäß der Beziehung

$$(4) \qquad a2=1/(2*thr)$$

gewählt. Die bewegten Objekte werden mit Segmenten der binären Objektmaske M(k) identifiziert.

Experimentelle Untersuchungen an Straßenverkehrsszenen haben ergeben, daß eine lineare Abhängigkeit des Filterkoeffizienten a1 vom Schwellwert thr zu zufriedenstellenden Ergebnissen führt, wobei die lineare Abhängigkeit so gewählt wird, daß der Bereich 10 <= thr <= 60 dem Bereich 0,2 <= a1 <= o,o5 entspricht.

Bei einer weiteren bevorzugten Ausführungsform der Erfindung wird der generierte Hintergrund abgespeichert, wenn über einen längeren Zeitraum keine bewegten Objekte detektiert wurden, da man in diesem Fall von einer hohen Qualität des Hintergrundbildes ausgehen kann. Wird andererseits eine hohe Dichte von Bewegtobjekten gemessen, ist eine Adaption des Hintergrundbildes mit hoher Adaptionsrate nicht sinnvoll. Statt dessen wird erfindungsgemäß das abgespeicherte Hintergrundbild als momentanes Hintergrundbild zur Detektion von Bewegtobjekten bei hoher Bewegtobjektdichte verwendet. Die Bewegtobjektdichte wird dabei vorzugsweise in Abhängigkeit von der Zahl der brauchbaren Segmente mit Bezug auf die Zahl der nicht brauchbaren Segmente ermittelt.

Bei einem weiteren bevorzugten Ausführungsbeispiel der Erfindung wird in einer Initialisierungsphase das Hintergrundbild zu jedem Zeitpunkt adaptiert, um schnell einen brauchbaren Hintergrund zu bekommen. Nach Abschluß dieser Initialisierungsphase wird die Adaptionsrate des Hintergrundbildes in Abhängigkeit von der Bewegtobjektdichte geregelt. Bei hoher Bewegtobjektdichte wird ein niedriger Wert der Adaptionsrate verwendet, da dann der Hintergrund durch Bewegtobjekte an vielen Stellen verdeckt wird. Ansonsten wird eine höhere Adaptionsrate gewählt, um die Qualität des Hintergrundbildes zu verbessern. Die Adaptionsrate des Hintergrundbildes ist durch die Filterkoeffizienten a1 bzw. a2 gegeben.

Experimentelle Untersuchungen haben ferner gezeigt, daß die Ergebnisse der Segmentierung der binären Objektmasken stark von dem gewählten Wert des Schwellwertes thr abhängen. Insbesondere eine zu kleine Wahl dieses Schwellwertes thr ist daran zu erkennen, daß das Verhältnis von brauchbaren zu insgesamt gefundenen Segmenten sehr klein wird. In diesem Fall wird der Wert eines Maluszählers erhöht, es sei denn es würden überhaupt keine brauchbaren Segmente erkannt, da in diesem Fall eine Szene ohne Bewegtobjekte vorliegen könnte. Werden nur wenige Segmente entdeckt, wird dieser Maluszähler erniedrigt. Der Maluszählerstand wird schließlich nach einem längeren Zeitraum durch einen Fünfpunktregler in eine Änderung des Schwellwertes thr übersetzt.

Die Verwendung der erfindungsgemäßen Parameterregelungen führt zu einer Verbesserung der Zuverlässigkeit der Objektverfolgung um ca. 10 %. Auch die Qualität des ermittelten Hintergrundbildes wurde mit den erfindungsgemäßen Verfahren deutlich verbessert. Bei starker Bewegtobjektdichte verringerte sich die mittlere Abweichung pro Bildpunkt gegenüber der gleichen Kameraposition ohne Bewegtobjekte von 10 auf 4 Grauwerte, d. h. das Hintergrundbild wurde deutlich weniger gestört. Diese Messung wurde in einem Bildbereich mit ca. 20.000 Bildpunkten durchgeführt. Durch das Abspeichern eines Hintergrundbilds und die Regelung der Hintergrundadaptionsrate konnte der erforderliche Rechenaufwand insbesondere bei hoher Bewegtobjektdichte um 20 bis 30 % reduziert werden.

In dieser Beschreibung wurden folgende Veröffentlichungen zitiert:

Feiten, W.; Brandt v., A.; Lawitzky, G.; Leuthäusser, I.: "Ein videobasiertes System zur Erfassung von Verkehrsdaten"; 13. DAGM-Symposium 1991, München.

Karmann, K.P.; Brandt v., A.: "Moving objekt segmentation based on adaptive reference images"; Proc. of EUSIPCO 1990, 18.-21.09.90, Barcelona.

**Patentansprüche**

1. Verfahren zur Detektion bewegter Objekte in einer zeitlichen Folge I(k) digitaler Bilder mit folgenden Schritten:

   a) es wird eine zeitliche Folge B(k) von Hintergrundbildern und eine zeitliche Folge M(k) von binären Objektmasken gemäß den Beziehungen

$$(1) \quad B(k+1)=B(k)+(a1*(1-M(k))+a2*M(k))*(I(k)-B(k))$$

$$(2) \quad |B(k,p)-I(k,p)| > thr \rightarrow M(k,p)=1$$

$$(3) \quad |B(k,p)-I(k,p)| <= thr \rightarrow M(k,p)=0$$

ermittelt, wobei

k einen zeitlichen Index,
p eine Bildpunktvariable,
thr einen Schwellwert, sowie
a1 und a2 Filterkoeffizienten bezeichnen;

b) der Wert des Filterkoeffizienten a2 wird in Abhängigkeit von dem Schwellwert thr gemäß der Beziehung

$$(4) \quad a2=1/(2*thr)$$

gewählt;

c) die bewegten Objekte werden mit Segmenten der binären Objektmasken M(k) identifiziert, wobei d1 und thr Parameter des Verfahrens sind, welche der Anwender entweder vorwählt oder auf geeigneter Weise adaptieren lässt.

2. Verfahren nach Anspruch 1, bei dem der Filterkoeffizient a1 im Bereich 10 <= thr <= 60 linear von dem Schwellwert thr, mit Werten im Bereich 0,2 <= a1 <= 0,05, abhängt.

3. Verfahren nach einem der vorhergehenden Ansprüche, bei dem aus den Segmenten der binären Objektmasken M(k) eine Bewegtobjektdichte ermittelt wird, und bei dem die Filterkoeffizienten a1 und a2 in Abhängigkeit von dieser Bewegtobjektdichte so gewählt werden, daß hohen Werten der Bewegtobjektdichte niedrige Werte der Filterkoeffizienten entsprechen.

4. Verfahren nach einem der vorhergehenden Ansprüche, bei dem das momentane Hintergrundbild gespeichert wird, wenn während eines längeren Zeitraums keine bewegten Objekte detektiert wurden, und bei dem dieses gespeicherte Hintergrundbild so lange anstelle des momentanen Hintergrundbildes verwendet wird, wie die Bewegtobjektdichte einen vorgegebenen Wert übersteigt.

5. Verfahren nach einem der vorhergehenden Ansprüche, bei dem die Segmente der binären Objektmasken in brauchbare Segmente bzw. nicht brauchbare Segmente klassifiziert werden, und bei dem der Schwellwert thr durch folgende Maßnahmen geregelt wird:

a) ein Maluszähler mit vorgegebenem Anfangswert wird erhöht, wenn das Verhältnis von brauchbaren zu nicht brauchbaren Segmenten sehr klein wird, es sei denn, es werden überhaupt keine brauchbaren Segmente erkannt;

b) der Maluszähler wird erniedrigt, wenn wenige Segmente gefunden werden;

c) der Wert des Maluszählers wird nach einem längeren Zeitraum durch einen Fünfpunktregler in eine Änderung des Schwellwertes thr übersetzt.

## Claims

1. Method of detecting moving objects in a temporal sequence I(k) of digital images, comprising the following steps:

a) a temporal sequence B(k) of background images and a temporal sequence M(k) of binary object masks are determined in accordance with the relations

$$(1) \qquad B(k+1)=B(k)+(a1^*(1-M(k))+a2^*M(k))^*(I(k)-B(k))$$

$$(2) \qquad |B(k,p)-I(k,p)| > thr \rightarrow M(k,p)=1$$

$$(3) \qquad |B(k,p)-I(k,p)| <= thr \rightarrow M(k,p)=0$$

where

k designates a temporal index,
p designates a pixel variable,
thr designates a threshold value and
a1 and a2 designate filter coefficients;

b) the value of the filter coefficient a2 is selected as a function of the threshold value thr in accordance with the relation

$$(4) \qquad a2=1/(2^*thr);$$

c) the moving objects are identified using segments of the binary object masks M(k), al and thr being parameters of the method which the user either preselects or can adapt in a suitable way.

2. Method according to Claim 1, in which within the range 10 <= thr <= 60 the filter coefficient al is linearly dependent upon the threshold value thr, with values within the range 0.2 <= a1 <= 0.05.

3. Method according to one of the preceding claims, in which a moving-object density is determined from the segments of the binary object masks M(k) and in which the filter coefficients al and a2 are selected as a function of this moving-object density in such a manner that low values of the filter coefficients correspond to high values of the moving-object density.

4. Method according to one of the preceding claims, in which the instantaneous background image is stored, if no moving objects have been detected during a relatively long period of time, and in which this stored background image is employed in place of the instantaneous background image as long as the moving-object density exceeds a predetermined value.

5. Method according to one of the preceding claims, in which the segments of the binary object masks are classified into usable segments and unusable segments respectively, and in which the threshold value thr is controlled by the following measures:

a) a Malus counter with a predetermined initial value is incremented if the ratio of usable to unusable segments becomes very small, unless no usable segments at all are recognized;

b) the Malus counter is decremented if few segments are found;

c) the value of the Malus counter is translated, after a relatively long period of time, by a five-point controller into an alteration of the threshold value thr.

**Revendications**

1. Procédé pour la détection d'objets en mouvement dans une suite temporelle I (k) d'images numériques comportant les étapes suivantes :

a) il est établi une suite temporelle B (k) d'images d'arrière-plan et une suite temporelle M (k) de masques d'objet binaires selon les rapports

$$(1) \qquad B\,(k+1)=B(k) + (a1 * (1-M(k)) + a2*M\,(k)) * (I(k)-B\,(k))$$

$$(2) \qquad IB\,(k,p)\,\text{-}I\,(k,p)I > thr \rightarrow M\,(k,p) = 1$$

$$(3) \qquad IB\,(k,p)\text{-}I\,(k,p)I <= thr \rightarrow M\,(k,p) = 0,$$

dans lesquels k désigne un indice temporel,

p une variable d'élément d'image,
thr une valeur seuil, ainsi
que a1 et a2 des coefficients de filtrage ;

b) la valeur du coefficient de filtrage a2 est choisie en fonction de la valeur seuil thr selon le rapport

$$(4) \qquad a2=1/\,(2*thr)\ ;$$

c) les objets en mouvement sont identifiés par des segments des masques d'objet binaires M (k), a1 et thr étant des paramètres du procédé, que l'utilisateur présélectionne ou fait adapter d'une manière appropriée.

2. Procédé selon la revendication 1, dans lequel le coefficient de filtrage a1 dépend dans la plage $10 <= thr <= 60$ linéairement de la valeur seuil thr, avec des valeurs situées dans la plage $0,2 <= a1 <= 0,05$.

3. Procédé selon l'une des revendications précédentes, dans lequel une densité d'objets en mouvement est établie à partir des segments des masques d'objet binaires M (k), et dans lequel les coefficients de filtrage a1 et a2 sont choisis en fonction de cette densité d'objets en mouvement, de sorte qu'à des valeurs élevées de la densité d'objets en mouvement correspondent des valeurs peu élevées des coefficients de filtrage.

4. Procédé selon l'une des revendications précédentes, dans lequel l'image d'arrière-plan instantanée est enregistrée, si aucun objet en mouvement n'a été détecté pendant un laps de temps prolongé, et dans lequel cette image d'arrière-plan enregistrée est utilisée à la place de l'image d'arrière plan instantanée aussi longtemps que la densité d'objets en mouvement dépasse une valeur prédéfinie.

5. Procédé selon l'une des revendications précédentes, dans lequel les segments des masques d'objet binaires sont triés en segments utilisables ou segments non utilisables, et dans lequel la valeur seuil thr est réglée par les dispositions suivantes :

a) un compteur de malus avec une valeur de départ prédéfinie est augmenté, lorsque le rapport de segments utilisables aux segments non utilisables est très petit, à moins qu'il ne soit reconnu absolument aucun segment utilisable ;
b) le compteur de malus est abaissé, lorsque peu de segments sont trouvés ;
c) la valeur du compteur de malus est traduite après un laps de temps prolongé en une modification de la valeur seuil par un régulateur à cinq points.